# FASCICULE DE BREVET EUROPEEN

(11) **EP 3 234 644 B1**
(45) Date de publication et mention de la délivrance du brevet: **09.09.2020**
(21) Numéro de dépôt: 15817176.9
(22) Date de dépôt: 15.12.2015
(51) Int. Cl.: G01S 17/89, G01S 17/42, G01S 17/87, G01S 17/58, G01S 7/48

(54) **PROCEDE DE DETECTION D'ELEMENTS MOBILES DANS UN BATIMENT ET INSTALLATION POUR LA MISE EN OEUVRE DE CE PROCEDE**
VERFAHREN ZUR ERKENNUNG BEWEGLICHER ELEMENTE IN EINEM GEBÄUDE UND VORRICHTUNG ZUR DURCHFÜHRUNG DES VERFAHRENS
METHOD FOR DETECTING MOVING ELEMENTS IN A BUILDING AND APPARATUS FOR IMPLEMENTING SAID METHOD

(30) Priorité: 16.12.2014 FR 1462545
(43) Date de publication de la demande: 25.10.2017
(73) Titulaire: Naga Concept, 77420 Champs-sur-Marne (FR)
(72) Inventeur: DUVAL, Philippe, 77500 Chelles (FR)
(74) Mandataire: Touroude, Magali Linda
(86) Numéro de dépôt international: PCT/EP2015/079835
(87) Numéro de publication internationale: WO 2016/096880

(56) Documents cités:
- EP-A1- 2 741 263
- WO-A1-2014/179839
- FR-A1- 2 769 716
- ADIAVIAKOYE LADJI ET AL: "Tracking of multiple people in crowds using laser range scanners", 2014 IEEE NINTH INTERNATIONAL CONFERENCE ON INTELLIGENT SENSORS, SENSOR NETWORKS AND INFORMATION PROCESSING (ISSNIP), IEEE, 21 avril 2014 (2014-04-21), pages 1-6, XP032604455, DOI: 10.1109/ISSNIP.2014.6827668
- AKAMATSU SHUN-ICHI ET AL: "Development of a person counting system using a 3D laser scanner", 2014 IEEE INTERNATIONAL CONFERENCE ON ROBOTICS AND BIOMIMETICS (ROBIO 2014), IEEE, 5 décembre 2014 (2014-12-05), pages 1983-1988, XP032765216, DOI: 10.1109/ROBIO.2014.7090627
- JAE HOON LEE ET AL: "Security Door System Using Human Tracking Method with Laser Range Finders", MECHATRONICS AND AUTOMATION, 2007. ICMA 2007. INTERNATIONAL CONFERENCE ON, IEEE, PI, 1 août 2007 (2007-08-01), pages 2060-2065, XP031135064, ISBN: 978-1-4244-0827-6

## Description

La présente invention concerne la détection d'éléments mobiles, plus particulièrement des personnes, évoluant dans un bâtiment et notamment un bâtiment recevant du public en relativement grand nombre tel qu'un aéroport, une gare, un centre commercial...

La plupart des bâtiments de ce type sont équipés de caméras qui sont généralement utilisées pour la surveillance desdits bâtiments à des fins de protection des personnes et des biens. Les images fournies par les caméras sont visionnées en temps réel par un opérateur ou enregistrées pour être traitées ultérieurement. Ce traitement ultérieur vise principalement à rechercher les images concernant un évènement qui s'est produit ou aurait pu se produire dans le bâtiment surveillé.

Les gestionnaires des bâtiments de ce type sont en outre intéressés par la détermination des flux de déplacement des utilisateurs de ces bâtiments. La connaissance des flux de déplacement a plusieurs intérêts. En temps réel, elle permet d'identifier des zones d'encombrement qui produisent des files d'attente par exemple devant une porte malencontreusement fermée ou des postes de service (caisses dans un magasin ; contrôle d'identité, douane ou enregistrement de bagages dans un aéroport). Cette identification en temps réel permet aux gestionnaires des bâtiments de prendre des mesures pour résorber les files d'attente par exemple en dépêchant du personnel sur place. Après un traitement ultérieur, la connaissance des flux de déplacement permet notamment de faire des statistiques sur la fréquentation des bâtiments ou de réagencer les bâtiments dans le but d'augmenter le débit des flux de circulation.

Il a été envisagé d'utiliser les images des caméras du réseau de surveillance pour déterminer de manière automatique les flux de déplacement des utilisateurs des bâtiments. Cette détermination nécessite cependant des algorithmes de traitement d'images qui sont complexes et qui mobilisent des ressources informatiques importantes. En outre, le comptage des personnes nécessite des images de très bonne qualité, ce qui impose de disposer de caméras ayant des capteurs de grande résolution et engendre des flux de données plus importants augmentant encore la complexité du traitement des images et la quantité de ressources informatiques à mobiliser. Le coût des moyens techniques à mettre en œuvre pour l'acquisition et le traitement des images devient alors très élevé.

Pour permettre une meilleure discrimination des personnes les unes par rapport aux autres et améliorer notamment les possibilités de suivi de personnes, il a été envisagé de reconstituer des images en trois dimensions à partir des images fournies par plusieurs caméras ayant des champs couvrant une même partie du bâtiment selon des orientations différentes. Cependant, ceci engendre des flux de données plus importants augmentant encore la complexité du traitement des images et la quantité de ressources informatiques à mobiliser.

En outre, la qualité des images fournies par les caméras vidéo est très dépendante des conditions d'éclairage, ainsi que des couleurs et/ou des motifs des éléments mobiles, des murs et du sol du bâtiment, ce qui complique encore l'exploitation de ces images.

Le document Adiaviakoye Ladji et al. (« Tracking of multiple people in crowds using laser range scanners", 2014 IEE Ninth International conference on intelligent sensors, sensor networks and information processing (ISSNIP), IEEE, 21 avril 2014, pages 1-6, XP032604455; DOI:10.1109/ISSNIP.2014.6827668) décrit le suivi d'une foule d'individu afin de comprendre leur comportement social, en étudiant la densité du trafic, la vitesse et la trajectoire des individus via une méthode d'extraction de caractéristiques basée sur la distribution accumulée de trames laser successives.

Le document Akamatsu Shun-ichi et al. (« Development of a person counting system using a 3D laser scanner", 2014 IEEE International conférence on robotics and biomimetics (ROBIO 2014), IEEE, 5 décembre 2014, pages 1983-1988, XP032765216, DOI: 10.1109/ROBIO.2014.7090627) décrit un système de comptage de personnes à l'aide d'un scanner laser 3D. Le système se compose d'une composante de détection des personnes, détectant les corps humains comme un nuage de points, d'une composante de suivi, suivant la personne détectée à l'aide d'un filtre kalman, et d'une composante de comptage comptant le nombre de personnes qui entrent et sortent d'une structure.

Le document Jae Hoon Lee et al. (Security door System using human tracking method with laser range finders", Mechatronics and automation 2007. ICMA 2007. International conférence on, IEEE, PI, 1 août 2007, pages 2060-2065, XP031135064, ISBN : 978-1-4244-0827-6) décrit une méthode de suivi et de comptage des personnes à l'aide de télémètres laser, appliquée à un nouveau système de surveillance de la zone d'entrée et de filtrage des intrus qui entrent par la porte sans être identifiés.

Un but de l'invention est de fournir un moyen relativement simple pour obtenir des informations sur des éléments mobiles dans un lieu et permettre une exploitation relativement aisée de ces informations.

A cet effet, on prévoit, selon l'invention, un procédé de détection d'éléments mobiles dans un lieu, comprenant les étapes de :
- effectuer plusieurs séquences de balayage au cours de chacune desquelles des impulsions laser sont émises dans le lieu,
- lors de chaque séquence de balayage et pour chaque impulsion rencontrant un élément formant obstacle, détecter un signal réfléchi par l'élément et en déduire une position de l'obstacle par rapport à l'émetteur/récepteur,
- lors de chaque séquence de balayage, reporter dans un repère commun des coordonnées d'un point correspondant à une position de l'élément détecté,
- distinguer les points correspondants aux éléments fixes et les points correspondant aux éléments mobiles sur un nombre prédéterminé de séquences de balayage,
ladite étape effectuant plusieurs séquences de balayage au cours de chacune desquelles des impulsions laser sont émises dans le lieu étant réalisée depuis plusieurs émetteurs/récepteurs de positions connues situées en hauteur et décalées latéralement par rapport à une partie du lieu, de manière à balayer plusieurs plans en azimut et en site de ladite partie du lieu depuis chacun des émetteurs/récepteurs, les plans étant agencés de telle manière qu'au moins une partie des impulsions arrive dans ladite partie du lieu à une hauteur comprise entre 1 mètre et 1,50 mètre environ.

Le procédé de l'invention repose sur des mesures télémétriques. Les impulsions laser de chaque émetteur permettent de déterminer une courbe représentative de la distance entre l'émetteur et les éléments formant obstacles dans le plan d'émission et sur l'angle de balayage. En combinant les courbes obtenues pour plusieurs émetteurs, on peut obtenir une cartographie de la partie de lieu balayée par les impulsions laser émises par les émetteurs. Le nombre de données à traiter dépend directement de l'écart entre deux impulsions laser émises et du nombre de plans balayés par chaque émetteur : ce nombre de données est relativement faible par rapport à un flux de données vidéo mais chaque donnée est une information de distance qui permet une discrimination plus efficace entre les éléments adjacents.

L'invention a également pour objet une installation de détection d'éléments mobiles dans un lieu, comprenant des émetteurs/récepteurs montés dans le lieu dans des positions prédéterminées pour émettre des impulsions laser vers au moins une partie du lieu, les émetteurs étant reliés à une unité de commande programmée pour mettre en œuvre ce procédé.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique de dessus d'un bâtiment pourvu d'une installation de détection conforme à l'invention ;
- la figure 2 est une vue schématique, en coupe selon la ligne II - II de la figure 1, de cette installation ;
- la figure 3 est un exemple de cartographie obtenue par la mise en œuvre du procédé de l'invention.

En référence aux figures, le procédé et l'installation conformes à l'invention sont décrits en application à un lieu, ici un bâtiment, généralement désigné en 100, délimité par quatre murs 101, 102, 103, 104. Le mur 102 est percé de deux portes 105, 106 et le mur 104 est percé d'une porte 107. Dans le bâtiment 100, des piliers 108 s'étendent depuis le sol pour soutenir un plafond non représenté et des comptoirs 109 sont répartis le long du mur 103. L'invention est plus particulièrement mise en œuvre pour détecter, dénombrer et suivre des êtres humains évoluant dans le bâtiment 100.

L'installation de détection conforme à l'invention comprend des émetteurs/récepteurs 1 d'impulsions laser. Les impulsions laser ont une longueur d'onde hors du domaine visible et une puissance suffisamment faible pour ne pas endommager la vue d'un utilisateur dont un œil serait touché par une impulsion laser. Selon un principe connu de télémétrie laser, lorsqu'une impulsion laser émise par un émetteur/récepteur 1 rencontre un obstacle, cet obstacle réfléchit une partie de l'impulsion laser. Cette partie réfléchie de l'impulsion laser (dite signal réfléchi) est reçue par l'émetteur/récepteur 1 qui détermine la distance entre lui-même et l'obstacle à partir, d'une part, du temps écoulé entre l'émission de l'impulsion laser et la réception du signal réfléchi et, d'autre part, de la vitesse de l'impulsion laser. Les émetteurs/récepteurs 1 sont des télémètres connus en eux-mêmes, ici de type « lidar » (de l'anglais « LIght Detection And Ranging »). Les émetteurs/récepteurs 1 utilisés ici émettent un faisceau ayant, à dix mètres, une section ovale avec un grand diamètre vertical de 16 cm et un petit diamètre horizontal de 6 cm. Avec des émetteurs/récepteurs 1 de ce type, il est considéré dans l'invention, compte tenu de la précision recherchée, que la distance maximale de détection fiable d'un être humain est de 25 mètres (la section du faisceau laser étant trop importante au-delà de cette distance pour isoler de manière fiable un être humain).

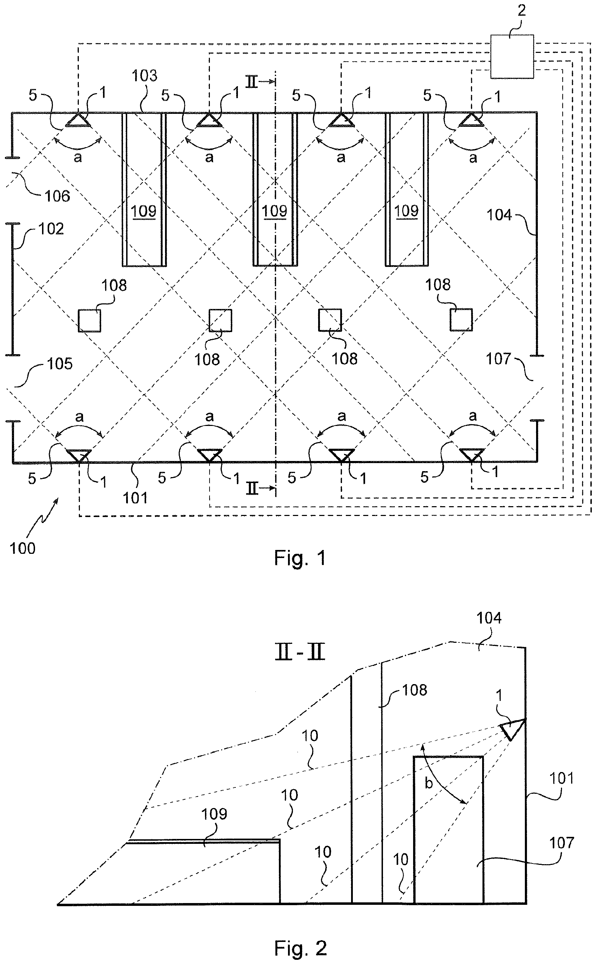

Chaque émetteur/récepteur 1 est agencé pour émettre des impulsions laser dans une pluralité de plans 10, ici quatre plans. Dans un même plan 10, les impulsions sont décalées deux à deux d'un tiers de degré. Les plans 10 sont décalés deux à deux de 2 degrés. Chaque émetteur/récepteur 1 a un champ 5 de 96 degrés en azimut (c'est-à-dire que l'émetteur/récepteur 1 balaie chaque plan sur 96 degrés) et de 6 degrés en site (on notera que ces valeurs d'angle ne sont pas respectées sur les figures 1 et 2 qui ne font qu'illustrer le principe de l'invention). L'angle formé par le plan le moins incliné (par rapport à l'horizontale) et l'horizontale est ici inférieur à 25° et est, plus précisément ici, égal à 15°. Les quatre plans sont balayés quinze fois par seconde de sorte que chaque émetteur/récepteur 1 fournit 1096 mesures quinze fois par seconde.

Les émetteurs/récepteurs 1 sont montés dans des positions prédéterminées pour que leurs champs 5 couvrent la partie centrale du bâtiment 100 à une hauteur comprise entre 1 mètre et 1,50 mètre (soit une plage contenant la hauteur moyenne à laquelle se trouve le buste d'un être humain). Les positions prédéterminées sont donc situées en hauteur par rapport aux êtres humains qui marcheraient sur le sol du bâtiment 100 et décalées latéralement par rapport à la partie du bâtiment 100 dans laquelle on cherche à détecter des êtres humains, ici la partie centrale du bâtiment 100. Il y a ici huit émetteurs/récepteurs 1 disposés en face à face sur les murs 101, 103. Les émetteurs/récepteurs 1 sont disposés de manière à limiter au maximum les zones d'ombre. En fonction des besoins, on peut éloigner ou rapprocher les lasers, ou bien changer leur orientation en azimut ou leur inclinaison par rapport au sol.

Les émetteurs/récepteurs 1 sont reliés via un réseau Ethernet à une unité de commande 2 et sont alimentés via le réseau Ethernet (procédé d'alimentation connu sous l'abréviation POE ou « Power over Ethernet »). L'unité de commande 2 est un ordinateur agencé pour exécuter un programme de traitement mettant en œuvre le procédé de l'invention.

Une fois l'installation mise en place, le programme de traitement est ensuite lancé.

Il débute par une étape de configuration au cours de laquelle l'unité de commande 2 est paramétrée en y précisant notamment la hauteur de pose, l'inclinaison et l'axe de visée des émetteurs/récepteurs 1, ainsi que la distance limite mesurée par les émetteurs/récepteurs 1 qui doit être prise en compte (ici 25 mètres). Pour chaque émetteur/récepteur 1, la distance limite, pour chaque angle d'azimut et chaque angle de site, est dans tous les cas inférieure à la distance séparant l'émetteur/récepteur 1 du sol (qu'on peut déterminer par calcul dès qu'on connaît l'inclinaison et la hauteur de l'émetteur/récepteur 1 par rapport au sol). Ces informations sont regroupées dans une table stockée dans une mémoire de l'unité de commande 2 auquel le programme de traitement a accès.

En outre, dans la présente application, la mise en œuvre du procédé de l'invention permet d'obtenir une cartographie du bâtiment 100 comme on le verra plus tard. Le support de cette cartographie est un quadrillage dont la taille des cases est paramétrée dans le programme en fonction de la précision souhaitée et de la distance des émetteurs/récepteurs 1 par rapport aux éléments à détecter (plus on s'éloigne de l'émetteur/récepteur 1 et plus la section transversale de l'impulsion laser augmente). Les cases ont ici une taille correspondant à celle d'un individu de corpulence moyenne. Le quadrillage forme un repère commun à tous les émetteurs/récepteurs 1, dans lequel seront reportées les positions des obstacles détectés par les émetteurs/récepteurs 1.

Le programme de traitement débute ensuite une phase d'étalonnage. A cette fin, plusieurs séquences de balayage sont effectuées par tous les émetteurs/récepteurs 1 sur une durée d'étalonnage prédéterminée.

Lors de chaque séquence de balayage et pour chaque impulsion rencontrant un obstacle, chaque émetteur/récepteur 1 détecte un signal réfléchi par l'obstacle et calcule une distance entre lui-même et l'obstacle. Chaque émetteur/récepteur 1 va ainsi transmettre à l'unité de commande 2 toutes les distances mesurées avec les angles d'azimut et angles de site correspondant à chacune.

A partir des distances mesurées avec les angles d'azimut et angles de site correspondant à chacune, et des hauteurs des émetteurs/récepteurs 1 trouvées dans la table relative à ceux-ci, l'unité de commande 2 détermine la position des obstacles dans le repère commun.

L'unité de commande 2 reporte alors sur le quadrillage, après chaque séquence de balayage, un point correspondant à la position de chaque élément détecté. On dispose alors d'une cartographie étalon sur laquelle seront ultérieurement reportés les éléments mobiles détectés dans le bâtiment 100 à un instant t ou pendant une durée prédéterminée.

Les points qui restent fixes sur la durée d'étalonnage sont considérés comme des éléments de structure ou de décoration du bâtiment, ou du mobilier. Pour l'étalonnage, les points correspondant aux éléments mobiles sont négligés.

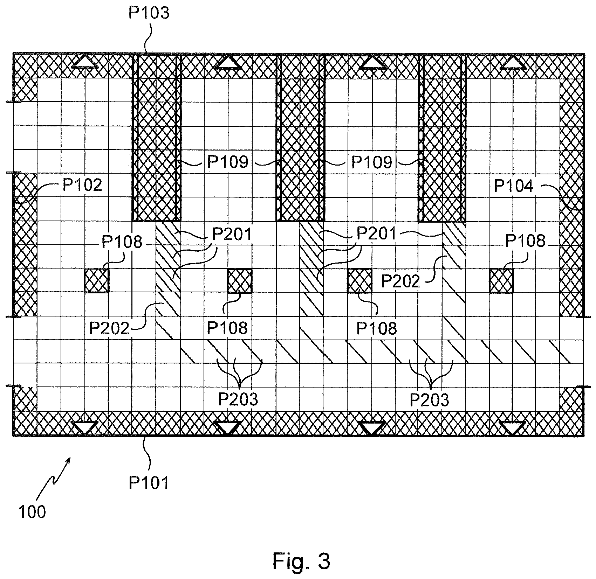

Ainsi, la cartographie comprend des cases dans lesquels sont reportées des points fixes (hachurage dense sur la figure 3) correspondant aux limites du bâtiment (P101, P102, P103, P104), aux piliers (P108) et aux comptoirs (P109). La cartographie peut être mémorisée et traitée sous la forme d'une image mais également sous la forme de matrice ou de table mettant en relation les points et leurs coordonnées.

L'étape d'étalonnage permet en outre de déterminer pour chaque émetteur/récepteur 1 une distance maximale de mesure (entre deux phases d'étalonnage) par angle d'azimut et angle de site.

Une fois l'étalonnage effectué, le programme de traitement lance la phase de détection des éléments mobiles.

Cette phase est identique dans son principe à la phase d'étalonnage sauf en ce que les éléments mobiles ne sont pas négligés.

Cette phase comprend ainsi les étapes de :
- faire effectuer par chaque émetteur/récepteur 1 des séquences successives de balayage au cours de chacune desquelles des impulsions laser sont émises dans le bâtiment 100,
- lors de chaque séquence de balayage et pour chaque impulsion rencontrant un élément formant obstacle, détecter un signal réfléchi par l'élément formant obstacle et en déduire une position de l'élément formant obstacle par rapport à l'émetteur/récepteur,
- lors de chaque séquence de balayage, reporter dans le repère commun un point correspondant à une position de l'élément détecté,
- distinguer les points correspondants aux éléments fixes et les points correspondant aux éléments mobiles sur un nombre prédéterminé de séquences de balayage.

Les distances mesurées sont ainsi transmises à l'unité de commande 2 pour être exploitées par le programme de traitement. Pour faciliter le traitement des données, il est prévu une mémoire tampon qui stocke les données avant que l'unité de commande 2 ne les traite. La capacité de la mémoire permet de stocker quelques secondes du flux de données provenant en temps réel des émetteurs/récepteurs 1. Le programme de traitement comprend un module agencé pour vérifier que les données ne sont pas corrompues et stocker les données par émetteur/récepteur 1 et par plan 10. Le programme de traitement est agencé pour récupérer ensuite les données dans la mémoire pour traiter les données des plans indépendamment les uns des autres pour chacun des émetteurs/récepteurs 1.

Chaque distance mesurée par un émetteur/récepteur 1 pour un angle d'azimut et un angle de site déterminés est comparée à la distance mesurée précédemment par l'émetteur/récepteur 1 pour les mêmes angles d'azimut et angle de site.

Si l'une des distances mesurées par l'un des émetteurs/récepteurs 1 est différente de la distance mesurée précédemment pour les mêmes angles d'azimut et de site et sort de la zone de la cartographie étalon définie comme correspondant aux limites du bâtiment 100, cette distance est négligée.

Si l'une des distances mesurées par l'un des émetteurs/récepteurs 1 est différente de la distance mesurée précédemment pour les mêmes angles d'azimut et de site et ne sort pas de la zone de la cartographie étalon définie comme correspondant aux limites du bâtiment 100, cette distance est considérée comme concernant un élément mobile et est mémorisée pour être traitée.

Toutes les distances mesurées par chaque émetteur/récepteur 1 qui sont inférieures aux distances correspondant à la cartographie étalon sont calculées en coordonnées cartésiennes et stockées dans une table des distances pour chaque plan. Comme la position en coordonnées cartésiennes de l'émetteur/récepteur 1, sa direction, son inclinaison, l'inclinaison de chaque plan 10 par rapport à l'émetteur/récepteur 1 sont connues, les coordonnées cartésiennes de l'élément ayant formé obstacle aux impulsions laser peuvent être calculées. Les points correspondant peuvent être reportés dans la cartographie instantanée.

Une analyse est menée par le programme de traitement pour assembler si possible ces points par une fonction de proximité de manière à reconstruire les éléments fixes et les éléments mobiles. Chaque élément est ainsi reconstruit sous la forme d'un agrégat de points. On recherche dans le mode de mise en œuvre décrit à reporter ceux-ci sur une cartographie instantanée (cartographie étalon valide à l'instant considéré et pourvue des points correspondant aux éléments mobiles), mais également à les compter et à déterminer la trajectoire des éléments mobiles (ceci est possible car la fréquence de balayage et d'analyse des données des émetteurs/récepteurs 1 est suffisamment rapide) .

Dans cette analyse, on cherche à déterminer si cette distance correspond à un nouvel élément ou correspond à un élément déjà détecté précédemment mais qui se serait déplacé. Dans le premier cas, un nouveau point est créé dans la cartographie instantanée. Dans le second cas, le centre de gravité de l'élément est recalculé.

L'analyse comprend une vérification de cohérence (cohérence des cartographies d'un instant à l'autre et/ou cohérence des points d'un instant à l'autre : un élément mobile doit normalement arriver dans le bâtiment 100 par l'une des portes 105, 106, 107 de sorte qu'il ne peut apparaître pour la première au milieu du bâtiment 100), une analyse de taille de chaque élément (un élément mobile est censé ici être un individu de sorte que la taille d'un élément mobile détecté ne peut être différente de celle d'un individu moyen que dans certaines limites). Si sa taille est trop importante, il est probable que deux individus rapprochés évoluent de conserve ; si la taille de deux éléments mobiles voisins est trop faible, il est probable que les deux éléments mobiles voisins correspondent à un seul individu et doivent donc être fusionnés. Il est donc important de prévoir dans l'étape de paramétrage d'introduire une taille d'élément mobile moyen.

Si l'élément nouvellement détecté est proche d'un élément précédemment détecté, il est vérifié si cette proximité est suffisante pour que l'élément nouvellement détecté soit en fait l'élément précédemment détecté qui se serait déplacé. Ceci permet de détecter les déplacements des éléments mobiles. Le programme exécuté par l'unité de commande 2 est agencé pour déterminer la trajectoire et la vitesse de déplacement des éléments mobiles en fonction de la fréquence de balayage et de la taille des cases de la cartographie.

Plus précisément, le programme de traitement détermine une distance entre le point nouvellement détecté et les éléments mobiles préalablement détectés. Si cette distance est nulle ou inférieure à un seuil correspondant à une précision de l'émetteur/récepteur, le programme de traitement augmente alors de 1 un poids de l'objet et recalcule son barycentre. Si le point est hors de tout élément mobile préalablement détecté mais suffisamment proche d'un de ceux-ci pour que l'ajouter audit élément mobile préalablement détecté ne donne pas à ce dernier une taille incompatible avec celle de l'élément mobile moyen, on l'agrège audit élément mobile préalablement détecté. En revanche, si le point ne peut pas être ajouté à un élément mobile préalablement détecté, on crée alors un élément mobile détecté de poids 1 dont le centre se trouve sur le point.

Une fois toutes les distances mesurées traitées, tous les points recalculés et intégrés dans les éléments mobiles détectés, on élimine les éléments mobiles détectés de poids trop faible (en général 1 seul point) suivant une règle paramétrable et l'on a donc un ensemble d'éléments présents dans les zones définies par les cases de la cartographie en cours.

Il est dès lors possible de compter le nombre d'éléments mobiles, de déterminer des parcours des éléments mobiles et de déterminer des taux d'occupation des cases par les éléments mobiles au cours du temps en surveillant l'évolution de la cartographie dans le temps.

Le procédé selon ce mode de mise en œuvre de l'invention comprend à cette fin une étape ultérieure de déterminer une densité temporelle des points correspondant aux obstacles mobiles dans le repère en fonction du nombre moyen de ces points au cours du temps dans différentes zones du repère et une étape ultérieure de retracer des flux de circulation des points correspondant aux obstacles mobiles dans le repère.

On obtient alors une cartographie de type thermographe (figure 3) sur laquelle sont représentés :
- des cases occupées de manière permanente (hachurage croisé serré) correspondant aux points appartenant aux murs (P101, P102, P103, P104), piliers (P108) et mobilier (P109) ;
- des cases très fréquemment occupées (hachurage serré) correspondant à des zones de stationnement long d'éléments mobiles (P201) ;
- des cases moyennement occupées (hachurage moyen) correspondant à des zones de stationnement moyen d'éléments mobiles (P202) ;
- des cases peu fréquemment occupées (hachurage clairsemé) correspondant à des zones de transit fréquent d'éléments mobiles (P203).

Les cases blanches sont des cases dans lesquelles il n'y a pas eu ou eu que peu de points reportés. A noter que seuls les flux entrant ont été indiqués à titre d'exemple sur la cartographie présentée en figure 3. Comme ceci est donné à titre d'exemple, il est bien évident qu'on peut représenter un plus grand nombre de densités temporelles de points pour affiner l'exploitation de la cartographie.

En parallèle de la phase de détection, le programme exécuté par l'unité de commande 2 est prévu pour mettre à jour la cartographie étalon périodiquement et/ou si nécessaire. Ainsi, si la distance mesurée par un des émetteurs/récepteurs 1, pour un angle d'azimut et un angle de site donnés, est différente de celle correspondant à la cartographie étalon et est stable pendant une période prédéterminée, un point correspondant à un élément fixe est disposé dans la cartographie étalon à la distance correspondante et l'ancien point correspondant à ces angles d'azimut et de site est supprimé. Le procédé de l'invention permet donc de maintenir à jour une cartographie étalon dynamique qui autorise le déplacement de mobilier dans le bâtiment 100 sans perte de la précision.

On notera que, d'une manière générale, le procédé de l'invention est en outre agencé pour limiter les erreurs de mesure notamment dues à de réflexions parasites lors de la phase d'étalonnage. Par exemple, sur un sol en marbre poli ou un sol mouillé, les impulsions laser sont réfléchies et donnent de fausses informations. L'image réfléchie va se trouver « en-dessous » du niveau du sol, il suffit de ne pas en tenir compte sachant la hauteur et l'angle de pose de l'émetteur/récepteur 1, tout ce qui se trouve « en dessous » du sol (hauteur inférieure à 0) est un reflet.

Les applications de l'invention sont nombreuses.

Par exemple, à des fins de marketing ou de sécurité, pour améliorer les flux de circulation ou effectuer des statistiques, on utilisera le procédé de l'invention pour :
- la prédiction des temps d'attente en fonction du nombre de personnes dans les files d'attente et du temps de service moyen pendant les dernières minutes, et du nombre de comptoirs en service ;
- la détermination des trajectoires et des vitesses des utilisateurs et déduction des goulots d'étranglement, des zones de ralentissement, des zones d'intérêt... dans le bâtiment 100.
- la détermination des comportements des éléments mobiles (temps de présence, temps de parcours)

Le procédé de l'invention permet également de détecter des mouvements anormaux (vitesse et direction) qui peuvent être ceux d'un pickpocket ou élément mobile devenu immobile depuis un temps trop important.

Le procédé de l'invention permet de suivre un élément mobile. L'unité de commande 2 peut être agencée pour piloter des caméras motorisés montées dans le bâtiment 100 et ainsi suivre en vidéo une personne soit par désignation soit suite à son comportement anormal.

Bien entendu, l'invention n'est pas limitée aux modes de réalisation décrits mais englobe toute variante entrant dans le champ de l'invention telle que définie par les revendications.

En particulier, l'installation peut avoir une structure différente de celle décrite. Par exemple, les émetteurs/récepteurs peuvent comprendre un dispositif unique ou un émetteur relié à un récepteur séparé.

Les émetteurs/récepteurs peuvent effectuer des balayages dans un seul plan, deux, trois ou plus de quatre plans.

Le nombre d'émetteurs/récepteurs peut être différent de celui mentionné. Ce nombre dépendra de la surface du bâtiment et de sa configuration. A titre d'exemple, avec neuf lasers judicieusement répartis et inclinés, aucun objet de plus de 30 cm de largeur ne peut passer sans être détecté dans une pièce de 720 m2 (à condition que l'objet ait une hauteur d'au moins 1,20 mètre).

Le quadrillage support de la cartographie peut être un maillage dont les mailles ont une forme non carrée et par exemple rectangulaire ou hexagonale. En variante également, on indique au programme, lors de la phase de paramétrage, les cases du quadrillage qui font partie de la zone réellement étudiée.

Le procédé de l'invention peut être utilisé pour la détection de tout élément mobile comme des véhicules ou des animaux. Les lieux où le risque de masquage est le plus important malgré les multiples plans auront une densité de lidars plus importante.

## Revendications

1. Procédé de détection d'éléments mobiles dans un lieu, comprenant les étapes de :
- effectuer plusieurs séquences de balayage au cours de chacune desquelles des impulsions laser sont émises dans le lieu,
- lors de chaque séquence de balayage et pour chaque impulsion rencontrant un élément formant obstacle, détecter un signal réfléchi par l'élément et en déduire une position de l'obstacle par rapport à l'émetteur/récepteur,
- lors de chaque séquence de balayage, reporter dans un repère commun des coordonnées d'un point correspondant à une position de l'élément détecté,
- distinguer les points correspondants aux éléments fixes et les points correspondant aux éléments mobiles sur un nombre prédéterminé de séquences de balayage,
ledit procédé étant **caractérisé en ce que** l'étape effectuant plusieurs séquences de balayage au cours de chacune desquelles des impulsions laser sont émises dans le lieu est réalisée depuis plusieurs émetteurs/récepteurs de positions connues situées en hauteur et décalées latéralement par rapport à une partie du lieu, de manière à balayer plusieurs plans en azimut et en site de ladite partie du lieu depuis chacun des émetteurs/récepteurs, les plans étant agencés de telle manière qu'au moins une partie des impulsions arrive dans ladite partie du lieu à une hauteur comprise entre 1 mètre et 1,50 mètre environ.

2. Procédé selon la revendication 1, comprenant une étape ultérieure de comptage des points correspondant aux obstacles mobiles présents dans différentes zones du repère à au moins un instant donné.

3. Procédé selon la revendication 1, comprenant une étape ultérieure de déterminer une densité temporelle des points correspondant aux obstacles mobiles dans le repère en fonction du nombre moyen de ces points au cours du temps dans différentes zones du repère.

4. Procédé selon la revendication 3, comprenant une étape ultérieure de retracer des flux de circulation des points correspondant aux éléments mobiles dans le repère.

5. Procédé selon la revendication 1, comprenant une étape de suivre en temps réel dans le repère un déplacement d'au moins un des points correspondant aux obstacles mobiles.

6. Procédé selon la revendication 1, comprenant une étape d'étalonnage préalable durant laquelle, lors d'une pluralité de séquences de balayage, les points correspondant aux obstacles fixes sont reportés dans le repère commun.

7. Procédé selon la revendication 1, comprenant une étape ultérieure de déterminer une distance entre un point nouvellement détecté et des éléments mobiles préalablement détectés et de faire correspondre le point nouvellement détecté et un des éléments mobiles préalablement détectés si cette distance est nulle ou inférieure à un seuil correspondant à une précision de l'émetteur/récepteur.

8. Procédé selon la revendication 7, comprenant l'étape ultérieure de, si cette distance est supérieure au seuil, vérifier si le point nouvellement détecté peut correspondre à un élément mobile préalablement détecté sans donner à ce dernier une taille incompatible avec une taille théorique d'un élément mobile moyen.

9. Installation de détection d'éléments mobiles dans un lieu, comprenant des émetteurs montés dans le lieu dans des positions prédéterminées pour émettre des impulsions laser vers une partie du lieu, les positions étant situées en hauteur et décalées latéralement par rapport à ladite partie du lieu, les émetteurs étant reliés à une unité de commande programmée pour mettre en œuvre le procédé selon l'une quelconque des revendications précédentes.

## Patentansprüche

1. Verfahren zum Erkennen von beweglichen Elementen an einem Ort, umfassend die folgenden Schritte:
- Ausführen einer Vielzahl von Abtastsequenzen, bei denen jeweils Laserimpulse in den Ort ausgesendet werden,
- während jeder Abtastsequenz und für jeden Impuls, der auf ein hindernisbildendes Element trifft, Erkennen eines von dem Element reflektierten Signals und daraus Ableiten einer Position des Hindernisses relativ zum Sender/Empfänger,
- für jede Abtastsequenz, Übertragen der Koordinaten eines Punktes, der einer Position des erkannten Elements entspricht, in ein gemeinsames Bezugssystem,
- Unterscheiden zwischen Punkten, die festen Elementen entsprechen, und Punkten, die beweglichen Elementen entsprechen, über eine vorgegebene Anzahl von Abtastsequenzen,
wobei das Verfahren **dadurch gekennzeichnet ist, dass** der Schritt, bei dem eine Vielzahl von Abtastsequenzen durchgeführt wird, während derer jeweils Laserimpulse in den Ort ausgesendet werden, von mehreren Sendern/Empfängern bekannter Positionen aus durchgeführt wird, die in der Höhe und seitlich versetzt in Bezug auf einen Teil des Ortes angeordnet sind, um mehrere Ebenen im Azimut und in der Höhe dieses Teils des Ortes von jedem der Sender/Empfänger aus abzutasten, wobei die Ebenen so angeordnet sind, dass mindestens ein Teil der Impulse in diesem Teil des Ortes in einer Höhe zwischen etwa 1 Meter und 1,50 Meter ankommt.

2. Verfahren nach Anspruch 1, ferner umfassend das Zählen der Punkte, die den beweglichen Hindernissen entsprechen, die in verschiedenen Bereichen des Bezugssystems zu mindestens einem gegebenen Zeitpunkt vorhanden sind.

3. Verfahren nach Anspruch 1, ferner umfassend das Bestimmen einer zeitlichen Dichte der Punkte, die den beweglichen Hindernissen im Bezugssystem entsprechen, in Abhängigkeit von der durchschnittlichen Anzahl dieser Punkte über die Zeit in verschiedenen Bereichen des Bezugssystems.

4. Verfahren nach Anspruch 3, ferner umfassend das Nachverfolgen der Zirkulationsströme der Punkte, die den beweglichen Elementen im Bezugssystem entsprechen.

5. Verfahren nach Anspruch 1, ferner umfassend die Echtzeitverfolgung einer Verschiebung von mindestens einem der Punkte, die den beweglichen Hindernissen entsprechen, im Bezugssystem.

6. Verfahren nach Anspruch 1, ferner umfassend das vorherige Kalibrieren, bei dem während mehrerer Abtastsequenzen die den festen Hindernissen entsprechenden Punkte in das gemeinsame Bezugssystem übertragen werden.

7. Verfahren nach Anspruch 1, ferner umfassend das Bestimmen eines Abstands zwischen einem neu erkannten Punkt und zuvor erkannten beweglichen Elementen und das Anpassen des neu erkannten Punkts und eines der zuvor erkannten beweglichen Elemente, wenn dieser Abstand Null oder kleiner als ein einer Sender/Empfänger-Genauigkeit entsprechender Schwellenwert ist.

8. Verfahren nach Anspruch 7, das den folgenden Schritt umfasst, bei dem, wenn dieser Abstand größer als der Schwellenwert ist, geprüft wird, ob der neu erkannte Punkt einem zuvor erkannten beweglichen Element entsprechen kann, ohne diesem eine Größe zu geben, die mit einer theoretischen Größe eines durchschnittlichen beweglichen Elements unvereinbar ist.

9. Anlage zum Erkennen von beweglichen Elementen an einem Ort, umfassend Sender, die an dem Ort in vorbestimmten Positionen angebracht sind, um Laserimpulse in Richtung eines Teils des Ortes auszusenden, wobei die Positionen in der Höhe und seitlich versetzt in Bezug auf diesen Teil des Ortes angeordnet sind, wobei die Sender mit einer Steuereinheit verbunden sind, die programmiert ist, um das Verfahren nach einem der vorhergehenden Ansprüche auszuführen.

## Claims

1. Method for detecting moving elements in a place, comprising the steps of:
- carrying out a plurality of scan sequences during each of which laser pulses are transmitted into the place,
- during each scan sequence and for each pulse hitting an element which constitutes an obstacle, detecting a signal reflected by the element and deducing therefrom a position of the obstacle in relation to the transceiver,
- during each scan sequence, putting the coordinates of a point corresponding to a position of the detected element into a common frame of reference,
- distinguishing the points corresponding to the fixed elements from the points corresponding to the moving elements over a predetermined number of scan sequences, said method being **characterized in that** the step of carrying out a plurality of scan sequences during each of which laser pulses are transmitted into the place is carried out from a plurality of transceivers of known positions which are in a high location and offset laterally with respect to part of the place, so as to scan a plurality of azimuth and elevation planes of said part of the place from each of the transceivers, the planes being arranged in such a way that at least some of the pulses reach said part of the place at a height of between approximately 1 meter and 1.50 meters.

2. Method according to claim 1, comprising a subsequent step of counting the points corresponding to the moving obstacles in different regions of the frame of reference at at least one specified moment in time.

3. Method according to claim 1, comprising a subsequent step of determining a temporal density of the points corresponding to the moving obstacles in the frame of reference on the basis of the average number of these points over time in different regions of the frame of reference.

4. Method according to claim 3, comprising a subsequent step of tracing circulation flows of the points corresponding to the moving elements in the frame of reference.

5. Method according to claim 1, comprising a step of tracking in real time movement of at least one of the points corresponding to the moving obstacles in the frame of reference.

6. Method according to claim 1, comprising a preliminary calibration step during which the points corresponding to the fixed obstacles are put into the common frame of reference during a plurality of scan sequences.

7. Method according to claim 1, comprising a subsequent step of determining a distance between a newly detected point and previously detected moving elements and of matching the newly detected point and one of the previously detected moving elements if this distance is zero or less than a threshold corresponding to a degree of precision of the transceiver.

8. Method according to claim 7, comprising the subsequent step of, if this distance is greater than the threshold, verifying whether the newly detected point can be matched to a previously detected moving element without assigning said moving element a size that is incompatible with a theoretical size of an average moving element.

9. Installation for detecting moving elements in a place, comprising transmitters mounted in the place in predetermined positions for transmitting laser pulses toward part of the place, the positions being in a high location and offset laterally with respect to said part of the place, the transmitters being connected to a control unit programmed to carry out the method according to any of the preceding claims.
